# FASCICULE DE BREVET EUROPEEN

(11) **EP 2 384 342 B1**
(45) Date de publication et mention de la délivrance du brevet: **16.01.2013**
(21) Numéro de dépôt: 10707623.4
(22) Date de dépôt: 29.01.2010
(51) Int. Cl.: C08F 8/30, C09J 151/06, C09J 153/00

(54) **COPOLYMERES A BLOCS PORTEURS DE GROUPES ASSOCIATIFS ET ADHESIF LES COMPRENANT**
BLOCKCOPOLYMERE MIT ASSOZIATIVEN GRUPPEN UND HAFTSTOFFE DAMIT
BLOCK COPOLYMERS HAVING ASSOCIATIVE GROUPS, AND ADHESIVE CONTAINING SAME

(30) Priorité: 30.01.2009 FR 0950576
(43) Date de publication de la demande: 09.11.2011
(73) Titulaire: Arkema France, 92700 Colombes (FR); Centre National de la Recherche Scientifique CNRS, 75016 Paris (FR)
(72) Inventeur: DUFAURE, Nicolas, F-27300 Bernay (FR); HIDALGO, Manuel, F-69530 Brignais (FR); GRANGE, Aurélie, F-54550 Pont Saint Vincent (FR); TOURNILHAC, François-Genes, F-75012 Paris (FR); LEIBLER, Ludwik, F-75006 Paris (FR)
(74) Mandataire: Cabinet Plasseraud
(86) Numéro de dépôt international: PCT/FR2010/050150
(87) Numéro de publication internationale: WO 2010/086569

(56) Documents cités:
- EP-A- 1 219 650
- WO-A-01/25292
- WO-A-2009/061673
- WO-A-2009/111433
- US-A- 5 332 784

## Description

La présente invention concerne des copolymères à blocs porteurs de groupes associatifs à base d'hétérocycles azotés, ainsi que des adhésifs thermofusibles comprenant un tel copolymère.

Les colles ou adhésifs thermofusibles sont des matériaux thermoplastiques solides à la température ambiante et qui par chauffage deviennent des liquides visqueux. Ces liquides visqueux sont appliqués sur un premier substrat puis on le couvre avec une seconde surface. Par refroidissement, on obtient une adhérence entre le substrat et la deuxième surface. Le temps ouvert est la période pendant laquelle la colle qui a été appliquée sur un substrat qui est, le plus souvent à la température ambiante, reste collante, c'est-à-dire l'intervalle de temps pendant lequel on peut appliquer la seconde surface et par refroidissement obtenir une adhérence entre le substrat et la seconde surface. Passé ce délai du temps ouvert on ne peut plus obtenir une adhérence suffisante entre le substrat et la seconde surface. Ces colles sont désignées par l'abréviation HMA (hot melt adhesives). La présente invention concerne ce type d'adhésifs.

Les adhésifs ayant un temps ouvert infini sont utiles pour les étiquettes autocollantes ou le ruban adhésif qu'on utilise à température ambiante. Selon la nature de l'adhésif on peut obtenir des adhérences plus ou moins fortes et par exemple décoller et recoller l'étiquette. Le collage s'effectue par pression souvent à température ambiante, d'où l'appellation pour cette catégorie d'adhésifs dits « sensibles à la pression » ou PSA (abréviation pour le terme anglais pressure-sensitive adhesives). L'adhésif est déposé sur le substrat (par exemple étiquette ou ruban) soit à chaud, en absence de tout solvant, soit à froid en présence d'un véhicule liquide pouvant être un solvant (adhésifs solvantés) ou de l'eau (adhésifs base aqueuse). Lorsque les adhésifs sensibles à la pression sont appliqués sans véhicule liquide, à chaud, c'est-à-dire à une température telle que l'adhésif coule, ces adhésifs sont désignés par le terme HMPSA (hot melt pressure sensitive adhesive). Ils sont aussi désignés parfois comme des compositions thermofusibles auto-adhésives ou adhésifs sensibles à la pression thermofusibles. La présente invention concerne, également, ce type d'adhésifs.

Ces compositions adhésives thermofusibles comportent généralement deux constituants principaux : un polymère thermoplastique - responsable des bonnes propriétés mécaniques et thermiques et d'au moins une partie des propriétés adhésives - et une résine tackifiante qui intervient pour améliorer la pégosité à chaud, la fluidité ou la mouillabilité. On y ajoute le plus souvent un certain nombre d'additifs tels que des plastifiants dont des huiles, ou des cires, des stabilisants, des charges. Les cires (par exemple des paraffines) permettent d'ajuster la fluidité, le temps ouvert et le temps de prise. Parmi les polymères thermoplastiques les plus utilisés on peut citer les copolymères éthylène-acétate de vinyle, éthylène-(meth)acrylate d'alkyle, copolymères polystyrène-polybutadiène-polystyrène, poly-alpha-oléfine atactique (APAO), caoutchouc thermoplastique, polyamide et autres. Les résines tackifiantes appartiennent principalement à trois grandes familles : les colophanes (et leurs dérivés), les résines terpéniques et les résines dérivées de pétrole (aliphatiques, aromatiques, et autres).

WO-A-2009/111433 décrit une composition d'adhésif comprenant un polymère bloc ayant un bloc rigide (A) de poly(méthyl)méthacrylate et un bloc souple (B) de poly(n-butyl)acrylate avec 5 phr d'additif associatif EMI TFSI portant une fonction 1-éthyle-3-méthylimidazolium.

WO-A-2009/61673 décrit un copolymère bloc de polystyrène et de polyvinylpyridine.

US-A-5332784 décrit un copolymère bloc de polystyrène et de polybutadiène modifié par un groupe imidazolidinone modifié. Les polymères sont utilisés en tant qu'adhésifs.

WO-A-2001/25292 décrit la modification d'un polymère bloc acrylique par un groupe méthyl imidazole.

EP-A-1219650 décrit des copolymères à base d'acide méthacrylique et de méthyl méthacrylate et à base de butyl acrylate et de méthyl méthacrylate avec un groupe 2-(2-oxo-1-imidazolidinyl)éthylméthacrylate. Les copolymères peuvent être utilisés dans les compositions adhésives en émulsion.

Les inventeurs ont montré que l'utilisation d'un copolymère à blocs porteur de groupes associatifs à base d'hétérocycle azoté, permet d'améliorer l'adhésion à chaud entre deux supports.

En particulier, les inventeurs ont montré qu'un copolymère spécifique porteur de groupes associatifs à base d'hétérocycle azoté présente une résistance au cisaillement en fonction de la température améliorée par rapport aux mêmes copolymères ne portant pas de groupes associatifs.

Ainsi, un tel copolymère apporte à l'adhésif thermofusible le comprenant, une adhésion améliorée ou même une adhésion similaire aux adhésifs de l'art antérieur en appliquant l'adhésif selon l'invention à une température plus basse. Ce copolymère peut aussi permettre de réduire la quantité de résine tackifiante à ajouter pour obtenir un niveau d'adhésion équivalent. Ces groupes associatifs peuvent aussi conférer une meilleure résistance mécanique et chimique à la colle.

L'invention a donc pour objet un adhésif thermofusible comprenant un copolymère à blocs porteur de groupes associatifs à base d'hétérocycle azoté, lesdits groupes associatifs étant liés par une ou plusieurs liaisons covalentes au copolymère à blocs et étant choisis parmi un groupe imidazolidonyle, triazolyle, triazinyle, bis-uréyle et uréido-pyrimidyle, de préférence imidazolidonyle.

De préférence, le dit copolymère comprend :
- de 1 à 99% d'au moins un bloc souple, et
- de 1 à 99% d'au moins un bloc rigide.

Par bloc souple, on entend au sens de la présente invention un bloc pour lequel la Tg est inférieure à la température ambiante d'au moins 10°C.

Le terme « porteur » signifie au sens de la présente invention que le copolymère à bloc et les groupes associatifs sont liés par une ou plusieurs liaisons covalentes.

Par bloc rigide, on entend au sens de la présente invention un bloc pour lequel la Tg est supérieure à la température ambiante d'au moins 20°C.

Tg désigne la température de transition vitreuse d'un polymère mesurée, qui peut par exemple être mesurée par DSC selon la norme ASTM E1356. Par abus de langage, on peut parler aussi de la Tg d'un monomère pour désigner la Tg de l'homopolymère ayant une masse moléculaire moyenne en nombre Mn d'au moins 10000 g/mol, obtenu par polymérisation dudit monomère. Ainsi, on pourra trouver des phrases où on dit que l'acrylate d'éthyle a une Tg de -24°C car l'homopolyacrylate d'éthyle a une Tg de -24 °C. Tous les pourcentages sont donnés en poids, sauf mention contraire.

De préférence, le copolymère à blocs, est composé d'un bloc central B de Tg<0°C et d'au moins deux blocs rigides latéraux A et A' de Tg>40°C. Conformément à la définition donnée en 1996 par l'IUPAC dans ses recommandations sur la nomenclature des polymères, on désigne par copolymère à blocs un copolymère constitué de blocs adjacents qui sont constitutionnellement différents, c'est-à-dire de blocs comprenant des motifs dérivés de monomères différents ou des mêmes monomères, mais selon une composition ou une distribution séquentielle ou encore une configuration spatiale des motifs différente. Un copolymère à blocs peut être par exemple un copolymère dibloc, tribloc ou en étoile.

Le copolymère à blocs est par exemple un copolymère tribloc A-B-A' comprenant un bloc central souple B relié par des liaisons covalentes à deux blocs rigides latéraux A et A' (c'est-à-dire disposés de chaque côté du bloc central B). A et A' pouvant être identiques ou différents (ce type de copolymère est parfois aussi noté A-b-B-b-A').

De préférence, le copolymère à blocs est tel que le(s) bloc(s) rigide(s) latéraux et le bloc B sont incompatibles, c'est-à-dire qu'ils présentent un paramètre d'interaction de Flory-Huggins χ_{AB}>0 à température ambiante. Ceci entraîne une microséparation de phase avec formation d'une structure diphasique à l'échelle microscopique. Le copolymère à blocs est alors nanostructuré c'est-à-dire qu'il se forme des domaines dont la taille est inférieure à 100 nm, de préférence comprise entre 10 et 50 nm. La nanostructuration présente comme avantage de conduire à un matériau bien transparent quelle que soit la température.

Le copolymère à blocs peut être obtenu à l'aide des techniques de polymérisation connues de l'homme du métier. L'une de ces techniques de polymérisation peut être la polymérisation anionique telle qu'elle est par exemple enseignée dans les documents suivants FR 2762604, FR 2761997 et FR 2761995. Il peut s'agir aussi de la technique de polymérisation radicalaire contrôlée qui comprend plusieurs variantes selon la nature de l'agent de contrôle qui est utilisé. On peut citer la SFRP (Stable Free Radical Polymerization) qui utilise des nitroxydes comme agents de contrôle et peut être amorcée par des alcoxyamines, l'ATRP (Atom Transfer Radical Polymerization) utilise des complexes métalliques comme agent de contrôle et est amorcée par des agents halogénés, la RAFT (Reversible Addition Fragmentation Transfer) fait appel quant à elle à des produits soufrés tels que des dithioesters, des trithiocarbonates, des xanthates ou des dithiocarbamates. On pourra se reporter à la revue générale Matyjaszewski, K. (Ed.), ACS Symposium Series (2003), 854 (Advances in Controlled/Living Radical Polymerization) ainsi qu'aux documents suivants pour plus de détails sur les techniques de polymérisation radicalaire contrôlée pouvant être utilisées : FR 2825365, FR 2863618, FR 2802208, FR 2812293, FR 2752238, FR 2752845, US 5763548 et US 5789487.

Pour l'obtention d'un copolymère tribloc ABA' à l'aide de la technique de polymérisation radicalaire contrôlée, on peut utiliser avantageusement une alcoxyamine difonctionnelle de formule T-Z-T où les groupes T sont des nitroxydes et le groupe Z est un groupe amorceur difonctionnel capable de générer deux radicaux amorceurs. On commence par préparer le bloc central B en polymérisant à l'aide de l'alcoxyamine le mélange de monomères conduisant au bloc central qu'on peut décrire selon la notation employée ci-dessus comme T-B-Z-B-T. La polymérisation a lieu avec ou sans solvant, ou bien en milieu dispersé. Le mélange est chauffé à une température supérieure à la température d'activation de l'alcoxyamine. Lorsque le bloc central B est obtenu, on ajoute le ou les monomère(s) conduisant aux blocs latéraux. Il se peut qu'à l'issue de la préparation du bloc central, il reste des monomères non entièrement consommés que l'on peut choisir d'éliminer ou non avant la préparation des blocs latéraux. L'élimination peut consister par exemple à précipiter dans un non-solvant, récupérer et sécher le bloc central. Si l'on choisit de ne pas éliminer les monomères non entièrement consommées, ceux-ci peuvent polymériser avec les monomères introduits pour préparer les blocs latéraux. On trouvera dans les documents suivants WO 2006/053984 ou WO 03/062293 des exemples de préparation de copolymères à blocs par polymérisation radicalaire contrôlée. Lorsque la polymérisation commence par la formation du bloc B, les deux blocs latéraux A et A' sont identiques en termes de composition et de masse moléculaire moyenne (le copolymère à blocs a donc pour formule ABA).

S'agissant du bloc central B, celui-ci présente une Tg<0°C. La masse moléculaire moyenne en nombre Mn est comprise entre 10000 et 1000000 g/mol, de préférence entre 10000 et 50000 g/mol (par rapport à un étalon PMMA). La proportion en poids du bloc central B dans le copolymère à blocs est comprise entre 5 et 90%.

S'agissant des blocs latéraux A et A', ceux-ci présentent une Tg>40°C.

Le copolymère de l'invention peut être fonctionnalisé avec des monomères portant des groupes associatifs introduits pendant la copolymérisation; il peut aussi être greffé avec des groupes associatifs après l'étape de polymérisation. Le copolymère de l'invention confère aux compositions adhésives dont il fait partie, un très bon comportement cohésif et adhésif en fonction de la température.

De préférence, l'adhésif selon l'invention comprend en outre au moins une résine tackifiante.

Cet adhésif est généralement déposé à chaud sur un substrat.

Des résines tackifiantes qui conviennent, sont par exemple la colophane, les esters de colophane, la colophane hydrogénée, les polyterpènes et dérivés, les résines de pétrole aromatiques ou aliphatiques, les résines cycliques hydrogénées. Ces résines ont typiquement une température de ramollissement bille anneau entre 25°C et 180°C et de préférence entre 50°C et 135°C.

D'autres exemples de dérivés de colophane sont décrits dans ULLMAN'S Vol A 23 p. 79 - 86.

A titre de dérivés de la colophane on peut citer ceux obtenus par hydrogénation, deshydrogénation, polymérisation, estérification. Ces dérivés peuvent être utilisés tels quels ou sous forme d'esters de polyols tels que les esters de pentaerythritol, polyéthylène glycol et glycérol.

A titre de résine tackifiante on peut encore citer les dicyclopentadiènes.

La présence d'un copolymère porteur de groupes associatifs dans l'adhésif objet de l'invention, permet d'améliorer l'adhésion et la mise en forme de l'adhésif. Il est donc possible d'obtenir un collage à plus basse température pour une même efficacité, par rapport à un adhésif ne comprenant pas un tel copolymère. Cela permet de réduire la quantité de résine tackifiante à utiliser pour avoir les propriétés souhaitées.

Ainsi, dans un mode de réalisation préféré de l'invention, l'adhésif comprend 1 à 70 parties de résine pour 100 parties du mélange de copolymère et résine, et de préférence 20 à 50 parties de résine pour 100 parties du mélange de copolymère et résine.

Les adhésifs objets de l'invention peuvent comprendre en outre un ou plusieurs plastifiants en tant qu'additif.

Les plastifiants que l'on peut utiliser dans les adhésifs de l'invention sont par exemple des huiles minérales paraffiniques aromatiques ou naphténiques. Ils servent essentiellement à baisser la viscosité et à apporter du tack. La quantité de plastifiant peut être comprise entre 10 et 30 parties pour 100 parties du mélange d'adhésif.

A titre de plastifiant on peut encore citer les phtalates, azelates, adipates, le phosphate de tricresyl et les polyesters.

Les adhésifs de l'invention peuvent comprendre également des charges et des stabilisants en tant qu'additifs.

A titre d'exemple de charges, on peut citer la silice, l'alumine, le verre, les billes de verre, les carbonates de calcium, les fibres, et hydroxydes métalliques. Ces charges ne doivent pas trop réduire le tack ni les propriétés mécaniques ou adhésives de la colle après son application. La quantité de charges peut représenter jusqu'à 100 parties pour 100 parties d'adhésif.

Il est recommandé d'ajouter des stabilisants tels que les antioxydants, on peut utiliser les antioxydants habituels des thermoplastiques.

Les colles thermofusibles de l'invention sont préparées par mélange à l'état fondu à des températures comprises entre 130°C et 200°C jusqu'à ce qu'on obtienne un mélange homogène. La durée de mélange peut être de l'ordre de 30 minutes à 3 heures. On peut utiliser les dispositifs habituels pour la mise en oeuvre des thermoplastiques tels que des mélangeurs internes, des extrudeuses, des cylindres.

La présente invention a également pour objet un copolymère à blocs comprenant :
- au moins un bloc A constitué de monomères renfermant :
   (i) au moins un méthacrylate de formule CH₂-C(CH₃)-COOR₁ où R₁ est un groupe alkyle linéaire ou ramifié en C₁-C₃, un groupe ramifié en C₄, un groupe cycloalkyle en C₃-C₈, un groupe aryle en C₆-C₂₀, un groupe arylalkyle en C₇-C₃₀ renfermant un groupe alkyle en C₁-C₉, un groupe hétérocyclique ou un groupe hétérocyclylalkyle renfermant un groupe alkyle en C₁-C₉, ces groupes étant éventuellement substitués par un ou plusieurs groupes identiques ou différents choisis parmi les groupes hydroxyle et halogène, et/ou
   (ii) au moins un monomère styrénique, tel que du styrène, éventuellement hydrogéné,
   et
- au moins un bloc B renfermant :
   (i) au moins un acrylate d'alkyle de formule CH₂-CH-COOR₂ où R₂ est un groupe alkyle linéaire ou ramifié en C₁-C₁₂ éventuellement substitué par un ou plusieurs groupes identiques ou différents choisis parmi les groupes hydroxyle et halogène, et/ou
   (ii)au moins un méthacrylate de formule CH₂-C(CH₃)-COOR₃ où R₃ est un groupe alkyle linéaire en C₄-C₁₂ ou un groupe alkyle ramifié en C₅-C₁₂, et/ou
   (iii) un monomère diénique tel que du butadiène ou de l'isoprène, ce monomère peut éventuellement avoir été hydrogéné après la polymérisation ;
ledit copolymère à blocs étant porteur d'un groupe associatif à base d'hétérocycle azoté, lesdits groupes associatifs étant liés par une ou plusieurs liaisons covalentes au copolymère à blocs et étant choisis parmi un groupe imidazolidonyle, triazolyle, triazinyle, bis-uréyle, uréido-pyrimidyle, de préférence, imidazolidonyle.

Par "copolymère à blocs", on entend selon l'invention un copolymère à blocs linéaire ou en étoile ou, par extension, un copolymère à gradient. Ce copolymère est considéré en tant qu'entité individuelle, sous forme auto-supportée, et non en tant que structure greffée sur un autre (co)polymère telle que l'écorce d'un système coeur-écorce classiquement utilisé comme agent anti-chocs.

De préférence le copolymère selon l'invention a un indice de polydispersité global Ip = Mw/Mn (où Mw est sa masse moléculaire moyenne en poids et Mn sa masse moléculaire moyenne en nombre) allant de 1 à 10 et de manière préférée de 1,05 à 2,5.

Le bloc A du copolymère à blocs selon l'invention a de préférence une température de transition vitreuse supérieure à 40°C. Il peut par exemple comprendre au moins un monomère choisi parmi : le styrène et l'alfa méthyl styrène, éventuellement hydrogénés, le méthacrylate de méthyle, le méthacrylate d'éthyle, le méthacrylate de propyle ou d'isopropyle, le méthacrylate d'isobutyle, le méthacrylate de tert-butyle ou leurs mélanges.

Selon une forme d'exécution préférée de l'invention, le bloc A comprend, voire est majoritairement constitué, par des unités monomère styrène.

Selon une forme d'exécution préférée de l'invention, le bloc A comprend, voire est majoritairement constitué, par des unités monomères méthacrylate de méthyle.

En outre, il est possible que le bloc A comprenne, en plus du méthacrylate ou du styrène, au moins un monomère dialkylacrylamide dont les groupes alkyle, linéaires ou ramifiés renferment indépendamment de 1 à 10 atomes de carbone, tel que le N,N-diméthylacrylamide.

De son côté, le bloc B a de préférence une température de transition vitreuse inférieure à 0°C et plus préférentiellement d'au plus -10°C.

Le bloc B peut ainsi comprendre au moins un monomère choisi parmi l'acrylate de n-butyle, l'acrylate de 2-éthylhexyle, l'acrylate d'hydroxyéthyle, le méthacrylate de 2-éthylhexyle, l'acrylate de n-octyle, le butadiène, l'isoprène ou un autre monomère diénique, et leurs mélanges.

Selon une forme d'exécution préférée de l'invention, le bloc B comprend, voire est majoritairement constitué de monomères acrylate de n-butyle et/ou acrylate de 2-éthylhexyle et éventuellement, de manière moins préférée, d'acrylate d'hydroxyéthyle, méthacrylate de 2-éthylhexyle, acrylate de n-octyle ou de leurs mélanges.

Selon une forme d'exécution préférée de l'invention, le bloc B comprend, voire est majoritairement constitué de monomères diéniques, tels que du butadiène et/ou de l'isoprène. Ces monomères peuvent être hydrogénés après la polymérisation.

Un exemple particulièrement préféré de copolymère à blocs selon l'invention est un copolymère à base de blocs méthacrylate de méthyle / acrylate de n-butyle /méthacrylate de méthyle. Un autre exemple particulièrement préféré de copolymère à blocs selon l'invention est un copolymère à base de blocs styrène /acrylate de n-butyle / styrène. Un autre exemple particulièrement préféré de copolymère à blocs selon l'invention est un copolymère à base de blocs styrène /butadiène / styrène.

### Groupes associatifs

Par "groupes associatifs", on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogènes, comprenant un hétérocycle azoté, de préférence diazoté, généralement à 5 ou 6 atomes. Les groupes associatifs utilisables selon la l'invention sont les groupes imidazolidonyle, triazolyle, triazinyle, bis-uréyle, uréido-pyrimidyle. Le groupe imidazolidonyle est préféré.

### Fonctionnalisation ou greffage du copolymère

Selon un mode de réalisation de l'invention, les groupes associatifs peuvent être introduits lors de la formation du copolymère. Ce mode de réalisation n'est pas limitatif, une extrusion réactive d'un mélange de groupes associatifs avec le copolymère à blocs préalablement formé pouvant aussi être envisagée.

### Introduction lors de la polymérisation :

Les copolymères objets de l'invention portent des groupes associatifs à base d'hétérocycle azoté. Ces groupes associatifs peuvent être présents aussi bien sur les blocs A que sur les blocs B, ou uniquement sur un seul type de blocs A ou B.

Une manière de modifier les copolymères de base, de façon à ce qu'ils portent des groupes associatifs à base d'hétérocycle azoté, est la fonctionnalisation du polymère pendant sa polymérisation, à l'aide de monomères fonctionnels susceptibles de copolymériser et, donc, de s'insérer, ainsi, dans le squelette même des chaînes polymère tout en portant lesdits groupes associatifs à base d'hétérocycle azoté. Lorsque ce mode de fonctionnalisation par copolymérisation est choisi pour obtenir le copolymère à blocs portant des groupes associatifs selon l'invention, les monomères fonctionnels portant les groupes associatifs sont introduits, pendant la polymérisation, en mélange avec les monomères utilisés pour construire le copolymère à blocs. Ainsi, par exemple, dans le cas d'un copolymère à blocs selon l'invention, de type ABA, les monomères fonctionnels portant les groupes associatifs peuvent être introduits en mélange avec le ou les monomères constituant les blocs A et/ou en mélange avec le ou les monomères constituant le bloc B.

On peut citer à titre d'exemples de monomères permettant l'introduction de groupes imidazolidinyle dans le polymère, le méthacrylate d'éthylimidazolidone et le méthacrylamide d'éthylimidazolidone.

Le copolymère objet de l'invention peut ainsi être obtenu par polymérisation radicalaire contrôlée en présence d'un nitroxyde, comme décrit dans la demande WO 03/062293.

Un tel procédé peut comprendre les étapes successives de :
1- préparation d'une monoalcoxyamine à partir d'un nitroxyde, tel que décrit notamment dans la demande WO 2004/014926,
2- préparation d'une polyalcoxyamine, notamment d'une dialcoxyamine, à partir de la monoalcoxyamine obtenue à l'étape 1, par exemple par réaction avec un α,ω-diol à extrémités estérifiées par un composé carboxyvinylique tel que l'acide (méth)acrylique,
3- préparation du bloc B par polymérisation des monomères correspondants en présence de la polyalcoxyamine obtenue à l'étape 2, jusqu'à un taux de conversion de préférence inférieur à 90; éventuellement, élimination des monomères résiduels ou polymérisation de ceux-ci par des techniques de polymérisation radicalaires classiques.
4- mélange du bloc B ainsi obtenu avec les monomères destinés à former le bloc A,
5- préparation du bloc A en utilisant le bloc B comme amorceur de polymérisation, et
6- élimination ou polymérisation par des techniques de polymérisation radicalaire classique, des monomères résiduels éventuellement présents dans le copolymère ainsi obtenu.

Lorsque les monomères résiduels des blocs A et/ou B sont éliminés par polymérisation utilisant des techniques bien connues de polymérisation radicalaire classique, la quantité d'amorceur radicalaire classique, comme par exemple un peroxyde organique ou un composé azoïque, et les conditions de polymérisation comme par exemple la température, doivent être choisies de manière à s'assurer que les homopolymères radicalaires classiques des monomères A et/ou B ont des masses moléculaires telles qu'ils seront majoritairement intégrés dans les blocs correspondants A et/ou B du copolymère à blocs préparé par polymérisation radicalaire contrôlée, selon la description ci-dessus. Ceci est nécessaire pour éviter que les chaînes d'homopolymères classiques A et/ou B obtenues à partir des monomères résiduels de la polymérisation à blocs, ne forment pas de nouvelles phases séparées des phases A et B du copolymère à blocs, ce qui entraînerait une modification morphologique pouvant se traduire par une moins bonne performance adhésive de la composition adhésive finale.Les nitroxydes utilisés dans ce procédé répondent par exemple à la formule (III) ci-dessous : 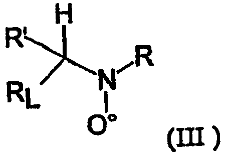 dans laquelle :
R et R' identiques ou différents, éventuellement reliés de manière à former un cycle, désignent des groupes alkyle en C₁-C₄₀ éventuellement substitués par un ou plusieurs groupes hydroxyle, alcoxyle ou amino, R et R' désignant de préférence indépendamment un groupe alkyle en C₁-C₁₀, plus préférentiellement en C₁-C₆, non substitué, tel qu'un groupe tert-butyle, et
R_{L} désigne un groupe monovalent de masse molaire supérieure à 16 g/mol tel qu'un groupe dialkyl phosphonate et en particulier un groupe diéthyl phosphonate.

En outre, le copolymère à blocs utilisable selon l'invention peut être obtenu dans le commerce auprès de la société ARKEMA sous la dénomination commerciale Nanostrength^{®}.

### Greffage :

Dans une autre forme d'exécution de l'invention, le copolymère objet de l'invention peut être obtenu par greffage de groupes associatifs sur un copolymère à blocs déjà constitué comprenant au moins une fonction réactive, telle qu'une fonction acide, anhydride, alcool, mercaptan, amine, époxy ou isocyanate, de préférence anhydride, par réaction d'un ou plusieurs agents de modification, portant d'une part un groupe associatif, et d'autre part un groupe réactif, choisi parmi les groupes amine, mercaptan, époxy, isocyanate, anhydride, alcool, de préférence amine, ledit groupe réactif étant susceptible de former une liaison covalente avec ladite fonction réactive.

La fonction anhydride portée par le copolymère peut être obtenue de deux manières. Elle peut être introduite soit lors de la polymérisation avec un monomère préférentiellement de type anhydride maléique, soit après la polymérisation, ce mode d'obtention est décrit par la suite. L'ajout d'anhydride lors de la polymérisation est préféré, lorsque cette voie n'est pas ou difficilement possible, la formation d'anhydride sur le polymère est choisie.

### Introduction ou formation d'anhydrides

Dans cette forme d'exécution, des anhydrides sont greffés sur le copolymère. Le copolymère peut par exemple être un copolymère à blocs styrène - butadiène - styrène, où le bloc mou a été hydrogéné. De l'anhydride maléique est ensuite greffé sur ce bloc mou par réaction radicalaire en utilisant, par exemple, des peroxydes. Cette réaction peut être effectuée en extrudeuse.

Dans cette autre forme d'exécution, des anhydrides sont formés sur le copolymère. Le copolymère porteur de fonctions réactives peut par exemple être un copolymère à blocs méthacrylate de méthyle - acrylate de butyle - méthacrylate de méthyle (également désigné MAM - ABU - MAM) , renfermant des fonctions anhydride. Celui-ci peut être obtenu à partir d'un copolymère à blocs de (méth)acrylate d'alkyle, notamment de méthyle, et de (méth)acrylate de butyle, fonctionnalisé à l'acide (méth)acrylique, renfermant par exemple entre 0,5 et 15 % en moles d'unités acide (méth)acrylique. Un tel copolymère à blocs fonctionnalisé à l'acide méthacrylique est ensuite traité pour obtenir les fonctions anhydride suivant un procédé de cyclisation, de préférence dans des conditions de catalyse basique, qui peut notamment être mis en oeuvre dans une extrudeuse. Parmi les catalyseurs basiques préférés on compte la soude et le méthoxyde de sodium, CH₃ONa. La cyclisation peut s'effectuer par passage dans une extrudeuse à vis simple ou double du copolymère de départ avec le catalyseur et éventuellement d'autres additifs, tels que des lubrifiants, des antioxydants, des colorants ; la température d'extrusion peut être comprise entre 200 et 300° C et de préférence supérieure à 250°C. Un ou plusieurs passages en extrusion peuvent être effectués pour obtenir le niveau de cyclisation (formation d'anhydride glutarique) souhaité. Le taux de cyclisation peut être contrôlé pour ajuster le taux de fonctions anhydride obtenues, qui peut par exemple aller de 0,1 à 20% molaire par bloc contenant les fonctions anhydrides..

### Agents de modification :

Les groupes réactif et associatif, respectivement, de l'agent de modification peuvent être séparés par une chaîne rigide ou flexible, constituée de 1 à 30 atomes de carbone dont certains au moins peuvent être substitués, et éventuellement d'un ou plusieurs hétéroatomes, choisis en particulier parmi le soufre, l'oxygène et l'azote, ladite chaîne renfermant éventuellement un ou plusieurs ponts ester ou amide. Il s'agit de préférence d'une chaîne alkylène linéaire ou ramifiée en C₁-C₁₀ éventuellement interrompue par un ou plusieurs atomes d'azote, plus préférentiellement d'une chaîne alkylène linéaire en C₁-C₆.

L'agent de modification peut ainsi répondre à l'une quelconque des formules (B1) à (B4) : 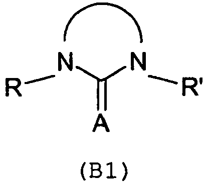 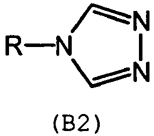 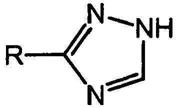 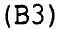 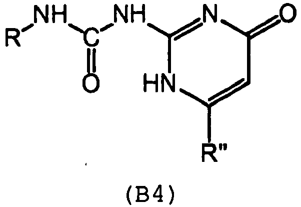 où :
R désigne un motif contenant au moins un groupe réactif.
R' désigne un atome d'hydrogène,
R" désigne un atome d'hydrogène ou un groupe quelconque,
A désigne un atome d'oxygène ou de soufre ou un groupement -NH, de préférence un atome d'oxygène.

Des exemples préférés d'agents de modification sont la 2-aminoéthylimidazolidone (UDETA), la 1-(2-[(2-aminoéthyl)amino]éthyl)imidazolidone (UTETA), la 1-(2-{2-[(2-aminoéthylamino]éthyl}amino)éthyl]imidazolidone (UTEPA), la N-(6-aminohexyl)-N'-(6-méthyl-4-oxo-1,4-dihydropyrimidin-2-yl)urée (UPy), le 3-amino-1,2,4-triazole (3-ATA) et le 4-amino-1,2,4-triazole (4-ATA). L'UDETA est préférée pour une utilisation dans la présente invention.

Certains de ces composés peuvent être obtenus par réaction de l'urée avec une polyamine. Par exemple, l'UDETA, l'UTETA et l'UTEPA peuvent respectivement être préparées en faisant réagir de l'urée sur la diéthylène triamine (DETA), la triéthylène tétramine (TETA) et la tétraéthylène pentamine (TEPA).

Le nombre de groupes associatifs porté par le copolymère dans cette forme d'exécution selon l'invention peut être simplement ajusté en faisant varier la quantité d'agent de modification ou le temps et la température de réaction. On préfère en général que la quantité d'agent de modification représente de 0,1 à 15% en poids, plus préférentiellement de 0,5 à 5% en poids, par rapport au poids du copolymère porteur de fonctions réactives et/ou que le nombre moyen de groupes associatifs par chaîne de copolymère soit compris entre 1 et 200 et de préférence entre 1 et 30.

Dans un mode de réalisation préféré de l'invention, le nombre moyen de groupes associatifs par chaîne de copolymère est supérieur ou égal à 3, et de préférence compris entre 3 et 200, et de manière tout à fait préféré entre 3 et 30.

Le procédé de greffage est réalisé en faisant réagir l'agent de modification et le copolymère porteur de fonctions réactives. Cette étape peut être réalisée à l'état fondu, par exemple dans une extrudeuse ou un mélangeur interne à une température qui peut aller de 100°C à 300°C et, de préférence de 150°C à 280°C et même de 200° à 280°C. L'agent de modification est mélangé au polymère, seul, ou à l'aide d'un additif permettant l'imprégnation des grains de polymère solide par l'agent de modification préalablement fondu. Le mélange solide avant introduction dans l'extrudeuse ou le mélangeur peut être rendu plus homogène par réfrigération pour faire solidifier l'agent de modification. Il est également possible de doser ce dernier dans l'extrudeuse ou le mélangeur après un début de fusion du polymère à greffer. Le temps à la température de greffage peut aller de quelques secondes à 5 minutes. L'agent de modification peut être introduit dans l'extrudeuse sous forme de mélange-maître dans un polymère qui, peut être le polymère à greffer. Selon ce mode d'introduction, le mélange maître peut comporter jusqu'à 30% en poids de l'agent de modification ; ensuite, le mélange maître est « dilué » dans le polymère à greffer lors de l'opération de greffage. Selon une autre possibilité, le greffage peut être effectué par réaction en phase solvant, par exemple dans le chloroforme anhydre. Dans ce dernier, la température de réaction peut aller de 5°C à 75°C, pendant des temps allant de quelques minutes à un jour et à des concentrations en polymère avant greffage comprises entre 1 et 50% en poids, par rapport au poids total de la solution. Selon le solvant choisi, la température de la réaction de greffage peut varier entre 5°C et 150°C, et de préférence entre 25°C et 100°C.

Il a été mis en évidence que le copolymère objet de l'invention permet d'améliorer l'adhésion à chaud entre deux supports.

La présente invention a donc également pour objet l'utilisation d'un copolymère porteur de groupes associatifs tel que décrit précédemment, pour améliorer le comportement cohésif et adhésif en fonction de la température des compositions adhésives dont il fait partie, permettant d'aboutir à une très bonne stabilité thermique.

Ainsi, un copolymère porteur de groupes associatifs tel que décrit précédemment, peut être utilisé pour améliorer l'adhésion et/ou la mise en forme de l'adhésif ; en d'autre termes, on obtient un collage à plus basse température pour une même efficacité ce qui permet de réduire la quantité de résine tackifiante à utiliser pour avoir les propriétés souhaitées.

L'ajout de ces groupes associatifs peut aussi permettre d'améliorer la cohésion des colles et adhésifs, de rendre la couche de colle plus résistante, pour par exemple en limiter le déchirement lors de l'application d'une contrainte. A l'inverse des colles réticulées connues, l'adhésif objet de la présente invention peut être remis en forme à haute température grâce à ses liaisons thermoréversibles. Ces groupes associatis peuvent aussi conférer à l'adhésif une meilleure résistance aux solvants.

La présente invention a également pour objet l'utilisation d'un adhésif tel que décrit précédemment pour la fabrication d'étiquettes, d'adhésifs pour lier deux feuilles ou couches de papier entre elles ou bien une feuille ou couche de papier avec un autre objet, tel qu'un sachet en plastique ou en papier plastifié, de colles thermofusibles structurales ou de réparation utilisables dans la construction, le bricolage, la fabrication d'objets y compris d'articles d'hygiène tels que des couches ou des serviettes jetables, y compris également des pièces composantes des véhicules, des bateaux, des avions, y compris aussi des articles d'habillement ou de décoration tels que des chaussures, des vêtements, des meubles et d'objets décoratifs, y compris des articles de bureautique comme des porte-papiers, des lampes, ainsi que tout autre application nécessitant l'assemblage de deux surfaces sans utilisation de véhicule liquide (eau ou solvant). On pourra également, grâce aux adhésifs thermofusibles de l'invention, porteurs de groupes associatifs, effectuer des collages sur des supports difficiles, comme le carton et ou les revêtements de sol.

L'invention sera mieux comprise à la lumière des exemples suivants, donnés à des fins d'illustration seulement et qui n'ont pas pour but de restreindre la portée de l'invention, définie par les revendications annexées.

### EXEMPLES

### Exemple 1 : Préparation d'un copolymère selon l'invention

### 1A - Préparation du copolymère à blocs

### Préparation de l'acide 2-méthyl-2[N-tertiobutyl-N-(diéthoxyphosphoryl-2,2-diméthylpropyl)aminoxy]propionique

Dans un réacteur en verre de 2 1 purgé à l'azote, on introduit 500 ml de toluène dégazé, 35,9 g de CuBr (250 mmol), 15,9 g de cuivre en poudre (250 mmol), 86,7 g de N,N,N',N',N"-pentaméthyl-diéthylènetriamine ou PMDETA (500 mmol) puis, sous agitation et à température ambiante (20°C), on introduit un mélange contenant 500 ml de toluène dégazé, 42,1 g d'acide 2-bromo-2-méthylpropionique (250 mmol) et 78,9 g de SG1 (ARKEMA) à 84% (225 mmol), ayant pour formule :

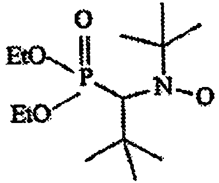

On laisse réagir pendant 90 min à température ambiante et sous agitation, puis on filtre le milieu réactionnel. Le filtrat toluénique est lavé deux fois avec 1,5 1 d'une solution aqueuse saturée en NH₄Cl.

On obtient un solide jaunâtre qui est lavé au pentane pour donner 51 g d'acide 2-méthyl-2[N-tertiobutyl-N-(diéthoxyphosphoryl-2,2-diméthylpropyl)aminoxy]propionique (rendement : 60%). La structure est notamment confirmée par spectrométrie de masse et RMN ¹H.

### Préparation d'une dialcoxyamine

On introduit dans un ballon de 100 ml purgé à l'azote 2 g de la monoalcoxyamine obtenue comme décrit ci-dessus ; 0,52 g de 1,4-butanediol diacrylate de pureté > 98% (1 équ.) et 6,7 ml d'éthanol. On chauffe à reflux pendant 20h à 78°C, puis l'éthanol est évaporé sous vide. On obtient 2,5 g d'une huile jaune très visqueuse.

L'analyse RMN ³¹P montre la disparition totale de la monoalcoxyamine (27,4 ppm) et l'apparition de la dialcoxyamine (multiplet à 24,7-25,1 ppm). L'analyse par spectrométrie de masse de type électrospray révèle une masse de 961 (M+).

### Préparation du copolymère à blocs

La synthèse se fait en 2 étapes :

### ➢ 1^{ère} étape : Préparation en masse d'un polymère poly(acrylate de n-butyle) vivant

Dans un réacteur de polymérisation de 2 1 équipé d'un moteur d'agitation à vitesse variable, d'entrées pour l'introduction des réactifs, de piquages pour l'introduction de gaz inertes permettant de chasser l'oxygène, de sondes de mesure de la température, d'un système de condensation de vapeurs avec reflux, d'une double enveloppe permettant de chauffer/refroidir le contenu du réacteur grâce à la circulation dans celle-ci d'un fluide caloporteur, on introduit 146 g d'acrylate de butyle, 7,68 g d'acide méthacrylique et 3,93 g de dialcoxyamine obtenue comme décrit précédemment. Après plusieurs dégazages à l'azote, le milieu réactionnel est porté à 115°C et cette température est maintenue par régulation thermique pendant plusieurs heures.

Des prélèvements sont réalisés tout au long de la réaction afin de :
- déterminer la cinétique de polymérisation par gravimétrie (mesure d'extrait sec),
- suivre l'évolution de la masse moléculaire en nombre (Mn) en fonction de la conversion du monomère en polymère.

Lorsque la conversion de 70 % est atteinte, le milieu réactionnel est refroidi à 60°C et l'acrylate de butyle résiduel est éliminé par évaporation sous vide.

Les masses moléculaires du poly(acrylate de n-butyle) en équivalent polystyrène sont de 49 090 g/mole pour Mp (masse moléculaire au sommet du pic), 35 090 g/mole pour Mn (masse moléculaire moyenne en nombre) et 49 830 g/mole pour Mw (masse moléculaire moyenne en poids).

### ➢ 2^{éme} étape : Réamorçage du poly(acrylate de n-butyle) vivant par le méthacrylate de méthyle

A 60°C, 478 g de méthacrylate de méthyle et 1028,7 g de toluène préalablement dégazés sont additionnés au poly(acrylate de n-butyle) préparé précédemment. Le milieu réactionnel est alors chauffé à 105°C pendant une heure, puis à 120°C pendant une heure supplémentaire. La conversion atteinte est de l'ordre de 50%. Après retour à température ambiante, la solution de copolymère (méthacrylate de méthyle -b- acrylate de n-butyle -b-méthacrylate de méthyle) à 50% en poids d'acrylate de n-butyle est soutirée du réacteur et les monomères et solvants résiduels sont éliminés par évaporation sous vide.

Les masses moléculaires du copolymère en équivalent polystyrène sont de 139 800 g/mole pour Mn (masse moléculaire moyenne en nombre) et 285 192 g/mole pour Mw (masse moléculaire moyenne en poids). L'indice de polydispersité est de 2,04.

Le copolymère obtenu est désigné sous la référence « AG07 ».

### 1B formation d'anhydride

Le copolymère ci-dessus comprend 5% d'acide méthacrylique dans la phase ABU.

Ce copolymère est placé 1 nuit en étuve sous vide à 235°C pour former des anhydrides (réaction entre un motif acide méthacrylique et un motif acrylate de butyle ou entre deux motifs acide méthacrylique)

Le copolymère obtenu est désigné sous la référence « AG12 ».

### 1C - Mélange du copolymère à blocs avec de l'UDETA par coextrusion

Le copolymère préparé comme décrit à l'Exemple 1B est mélangé avec de l'UDETA dans les conditions suivantes : La réaction de greffage entre l'UDETA et l'anhydride formé sur les MAM/ABU/MAM étant très rapide, celle-ci se fait par extrusion réactive, sur une micro-extrudeuse de marque DSM Research®

Le protocole expérimental est alors le suivant :
Dans une boite aluminium, sont pesés X grammes de MAM/ABU/MAM anhydridé et Y grammes d'UDETA. 3 mélanges sont réalisés, les quantités X et Y sont respectivement de : 14.85 g et 0.15 g pour un taux de greffage de 1%, désigné sous la référence « AG13 » ; 14.7 g et 0.3 g pour un taux de greffage de 2%, désigné sous la référence « AG14 » ; et 14.25 g et 0.75 g pour un taux de greffage de 5%, désigné sous la référence « AG15 ».

Dans un premier temps, seul le copolymère est introduit dans l'extrudeuse à l'aide d'un piston pneumatique, puis laissé à mélanger pendant quelques minutes

Une fois le mélange bien homogène, l'UDETA liquide est introduit à l'aide d'une pipette par la trémie ouverte. Le tout est ensuite laissé à mélanger pendant 6 minutes dans les conditions détaillées dans le tableau 1 suivant :

**Tableau 1 : Profil de température**

| Emplacement de la sonde | Température avant | Température arrière |
|---|---|---|
| Haut | 220°C | 220°C |
| Milieu | 220°C | 220°C |
| Bas | 220°C | 220°C |
| Température du fondu | 210°C | |

Vitesse des vis : 150 tours par minute

### Exemple 2 : Evaluation des propriétés mécaniques du copolymère selon l'invention, par étude de l'adhésion à chaud (test SAFT) :

### 2A - Protocoles des tests réalisés

Le test SAFT (ASTM D4498) mesure la capacité d'un HMPSA à résister à une force statique de 0,5 kgf, sous l'effet d'une montée régulière en température de 0,4°C/min.

Le SAFT est défini par la température à laquelle on peut observer une séparation par glissement vertical parallèle d'une aire de 25 x 25 mm² enduite de copolymère tel qu'obtenu à l'exemple 1, d'une plaque de carton plane.

Un film de copolymère est pressé à 190°C pendant 2 minutes entre deux feuilles de papier siliconé sous une force de 400 daN. Un carré de 25 x 25 mm² est ensuite découpé et placé entre deux éprouvettes en carton et pressé à 190°C sous 400 daN pendant 2 minutes. Les bandes à tester doivent être conditionnées au moins 4 heures avant l'essai dans une pièce climatisée à (23 ± 2) °C, (50 ± 5) % HR. Le ruban auto-adhésif est appliqué à l'aide d'un rouleau standard normalisé de 2 kg.

### 2B résultats obtenus

Les résultats ainsi obtenus sont regroupés dans le tableau 2 suivant :

**Tableau 2: Récapitulatif des températures de chute**

| Référence | Composition | Température moyenne de chute | Ecart-type |
|---|---|---|---|
| AG 07 (exemple comparatif) | MC 101 sans UDETA, ni anhydride | 161°C | 4,3 |
| AG 12 (exemple comparatif) | MC 101 sans UDETA, avec anhydrides | 141°C | 3,8 |
| AG 13 (copolymère selon l'invention) | MC 101 1% UDETA | Non tombé | / |
| AG 14 (copolymère selon l'invention) | MC 101 2% UDETA | Non tombé | / |
| AG 15 (copolymère selon l'invention) | MC 101 5% UDETA | Non tombé | / |

L'étuve est chauffée jusqu'à une température de 170°C, les échantillons pour lesquels il est mentionné « non tombé » ont atteint cette température sans que les deux plaques de carton ne se décollent.

On observe que les copolymères objets de l'invention présentent une meilleure adhésion à chaud entre deux supports par rapport à des copolymères non conformes à l'invention, ne portant pas de groupe associatif à base d'hétérocycle azoté.

## Revendications

1. Adhésif thermofusible comprenant un copolymère à blocs porteur de groupes associatifs à base d'hétérocycle azoté, lesdits groupes associatifs étant liés par une ou plusieurs liaisons covalentes au copolymère à blocs et étant choisis parmi un groupe imidazolidonyle, triazolyle, triazinyle, bis-uréyle et uréido-pyrimidyle, de préférence imidazolidonyle.

2. Adhésif selon la revendication 1, **caractérisé en ce que** le dit copolymère comprend :
- de 1 à 99% d'au moins un bloc souple dont la température de transition vitreuse est inférieure à la température ambiante d'au moins 10°C, et
- de 1 à 99% d'au moins un bloc rigide dont la température de transition vitreuse est supérieure à la température ambiante d'au moins 20°C.

3. Adhésif selon l'une quelconque des revendications 1 et 2 comprenant en outre au moins une résine tackifiante.

4. Adhésif selon l'une quelconque des revendications précédentes comprenant en outre un additif choisi parmi un plastifiant, une charge, un stabilisant et leurs mélanges.

5. Copolymère à blocs comprenant :
- au moins un bloc A constitué de monomères renfermant :
(i) au moins un méthacrylate de formule CH₂=C(CH₃)-COOR₁ où R₁ est un groupe alkyle linéaire ou ramifié en C₁-C₃, un groupe ramifié en C₄, un groupe cycloalkyle en C₃-C₈, un groupe aryle en C₆-C₂₀, un groupe arylalkyle en C₇-C₃₀ renfermant un groupe alkyle en C₁-C₄, un groupe hétérocyclique ou un groupe hétérocyclylalkyle renfermant un groupe alkyle en C₁-C₄, ces groupes étant éventuellement substitués par un ou plusieurs groupes identiques ou différents choisis parmi les groupes hydroxyle et halogène, et/ou
au moins un monomère styrénique, tel que du styrène, éventuellement hydrogéné,
et
- au moins un bloc B renfermant :
(i) au moins un acrylate d'alkyle de formule CH₂=CH-COOR₂ où R₂ est un groupe alkyle linéaire ou ramifié en C₁-C₁₂ éventuellement substitué par un ou plusieurs groupes identiques ou différents choisis parmi les groupes hydroxyle et halogène, et/ou
(ii)au moins un méthacrylate de formule CH₂=C(CH₃)-COOR₃ où R₃ est un groupe alkyle linéaire en C₄-C₁₂ ou un groupe alkyle ramifié en C₅-C₁₂, et/ou
(iii) un monomère diénique tel que du butadiène ou de l'isoprène ;
ledit copolymère à blocs étant porteur de groupes associatifs à base d'hétérocycle azoté, lesdits groupes associatifs étant liés par une ou plusieurs liaisons covalentes au copolymère à blocs et étant choisis parmi un groupe imidazolidonyle, triazolyle, triazinyle, bis-uréyle, uréido-pyrimidyle, de préférence, imidazolidonyle.

6. Copolymère selon la revendication 5, **caractérisé en ce que** le bloc A comprend ou est constitué par des monomères méthacrylate de méthyle.

7. Copolymère selon la revendication 5 ou 6, **caractérisé en ce que** le bloc B comprend au moins un monomère choisi parmi l'acrylate de n-butyle, l'acrylate de 2-éthylhexyle, l'acrylate d'hydroxyéthyle, le méthacrylate de 2-éthylhexyle, l'acrylate de n-octyle et leurs mélanges.

8. Copolymère selon l'une quelconque des revendications 5 à 7, **caractérisé en ce que** le copolymère est un copolymère à blocs méthacrylate de méthyle / acrylate de n-butyle /méthacrylate de méthyle.

9. Copolymère selon la revendication 5, **caractérisé en ce que** le bloc A comprend ou est constitué par des monomères styrène.

10. Copolymère selon la revendication 5 ou 9, **caractérisé en ce que** le bloc B comprend ou est constitué de monomères butadiène et/ou isoprène.

11. Copolymère selon l'une quelconque des revendications 5 ou 9, **caractérisé en ce que** le copolymère est un copolymère à blocs styrène / acrylate de butyle /styrène.

12. Copolymère selon l'une quelconque des revendications 5 à 11, **caractérisé en ce que** le nombre moyen de groupes associatifs par chaîne de copolymère est compris entre 1 et 200 et de préférence entre 1 et 30.

13. Utilisation d'un copolymère selon l'une quelconque des revendications 5 à 12 pour la fabrication d'un adhésif.

14. Utilisation d'un copolymère tel que défini dans l'une quelconque des revendications 5 à 13 pour améliorer la tenue en fondu d'un adhésif thermofusible et/ou son adhésion à des supports.

## Claims

1. Hot-melt adhesive comprising a block copolymer carrying associative groups based on a nitrogen heterocyclic compound, said associative groups being bonded to the block copolymer by one or more covalent bonds and being selected from an imidazolidonyl, triazolyl, triazinyl, bis-ureyl and ureido-pyrimidyl group, preferably imidazolidonyl.

2. Adhesive as claimed in claim 1, **characterised in that** said copolymer comprises:
- from 1 to 99% of at least one flexible block, the glass transition temperature of which is lower than ambient temperature by at least 10°C, and
- from 1 to 99% of at least one rigid block, the glass transition temperature of which is higher than ambient temperature by at least 20°C.

3. Adhesive as claimed in any one of claims 1 and 2, further comprising at least one tackifying resin.

4. Adhesive as claimed in any one of the preceding claims, further comprising an additive selected from a plasticizer, a filler, a stabiliser and mixtures thereof.

5. Block copolymer comprising:
- at least one block A made up of monomers containing:
(i) at least one methacrylate of formula CH₂=C(CH₃)-COOR₁ where R₁ is a C₁-C₃ straight or branched group, a C₄ branched group, a C₃-C₈ cycloalkyl group, a C₆-C₂₀ aryl group, a C₁-C₃₀ arylalkyl group containing a C₁-C₄ alkyl group, a heterocyclic group or a heterocyclylalkyl group containing a C₁-C₄ alkyl group, these groups optionally being substituted by one or more identical or different groups selected from the hydroxyl and halogen groups, and/or
at least one styrenic monomer, such as styrene, optionally hydrogenated,
and
- at least one block B containing:
(i) at least one alkyl acrylate of formula CH₂=CH-COOR₂ where R₂ is a C₁-C₁₂ straight or branched alkyl group, optionally substituted by one or more identical or different groups selected from the hydroxyl and halogen group, and/or
(ii) at least one methacrylate of formula CH₂=C(CH₃)-COOR₃ where R₃ is a C₄-C₁₂ straight alkyl group or a C₅-C₁₂ branched alkyl group, and/or
(iii) a dienic monomer such as butadiene or isoprene;
said block copolymer containing associative groups based on a nitrogen heterocyclic compound, said associative groups being bonded to the block copolymer by one or more covalent bonds and being selected from an imidazolidonyl, triazolyl, triazinyl, bis-ureyl and ureido-pyrimidyl group, preferably imidazolidonyl.

6. Copolymer as claimed in claim 5, **characterised in that** block A comprises or is made up of methyl methacrylate monomers.

7. Copolymer as claimed in claim 5 or 6, **characterised in that** block B comprises at least one monomer selected from n-butyl acrylate, 2-ethylhexyl acrylate, hydroxyethyl acrylate, 2-ethylhexyl methacrylate, n-octyl acrylate and mixtures thereof.

8. Copolymer as claimed in any one of claims 5 to 7, **characterised in that** the copolymer is a copolymer with methyl methacrylate / n-butyl acrylate / methyl methacrylate blocks.

9. Copolymer as claimed in claim 5, **characterised in that** block A comprises or is made up of styrene monomers.

10. Copolymer as claimed in claim 5 or 9, **characterised in that** block B comprises or is made up of butadiene and/or isoprene monomers.

11. Copolymer as claimed in any one of claims 5 or 9, **characterised in that** the copolymer is a copolymer with styrene / butyl acrylate / styrene blocks.

12. Copolymer as claimed in any one of claims 5 to 11, **characterised in that** the average number of associative groups per copolymer chain is between 1 and 200, preferably between 1 and 30.

13. Use of a copolymer as claimed in any one of claims 5 to 12 to manufacture an adhesive.

14. Use of a copolymer as defined in any one of claims 5 to 13 to improve the cohesiveness a hot-melt adhesive in the molten state and/or its adhesion to substrates.

## Patentansprüche

1. Schmelzhaftstoff, aufweisend ein Blockcopolymer mit assoziativen Gruppen auf der Basis eines stickstoffhaltigen Heterocyclus, wobei die besagten assoziativen Gruppen durch eine oder mehrere kovalente Bindungen mit dem Blockpolymer verbunden sind und aus einer Imidazolidonyl-, Triazolyl-, Triazinyl-, Bisureyl- und Ureidopyrimidyl-Gruppe, vorzugsweise aus einer Imidazolidonylgruppe, ausgewählt sind.

2. Haftstoff nach Anspruch 1, **dadurch gekennzeichnet, dass** das besagte Copolymer aufweist:
- 1 bis 99% von zumindest einem weichen Block, dessen Glasübergangstemperatur um mindestens 10°C niedriger als die Umgebungstemperatur ist, und
- 1 bis 99°C von zumindest einem harten Block, dessen Glasübergangstemperatur um mindestens 20°C höher als die Umgebungstemperatur ist.

3. Haftstoff nach einem der Ansprüche 1 und 2, weiterhin aufweisend zumindest ein klebrigmachendes Harz.

4. Haftstoff nach einem der vorhergehenden Ansprüche, weiterhin aufweisend ein Additiv, das aus einem Weichmacher, einem Füllstoff, einem Stabilisator und deren Mischungen ausgewählt ist.

5. Blockcopolymer, aufweisend:
- zumindest einen Block A, bestehend aus Monomeren, umfassend:
(i) zumindest ein Methacrylat der Formel CH₂=C (CH₃)-COOR₁, wobei R₁ eine lineare oder verzweigte C₁-C₃-Alkylgruppe, eine verzweigte C₄-Gruppe, eine C₃-C₈-Cycloalkylgruppe, eine C₆-C₂₀-Arylgruppe, eine C₇-C₃₀-Arylalkylgruppe mit einer C₁-C₄-Alkylgruppe, eine heterocyclische Gruppe oder eine Heterocyclyl-Alkyl-Gruppe mit einer C₁-C₄-Alkylgruppe ist, wobei diese Gruppen eventuell durch eine oder mehrere gleiche oder verschiedene Gruppen substituiert sind, die aus der Hydroxyl- und Halogengruppe ausgewählt sind, und/oder
zumindest ein Styrolmonomer, wie Styrol, eventuell wasserhaltiges Styrol, und
- zumindest einen Block B, umfassend:
(i) zumindest ein Alkylacrylat der Formel CH₂=CH-COOR₂, wobei R₂ eine lineare oder verzweigte C₁-C₁₂-Alkylgruppe ist, die eventuell durch eine oder mehrere gleiche oder verschiedene Gruppen substituiert ist, die aus der Hydroxyl - und Halogengruppe ausgewählt sind, und/oder
(ii) zumindest ein Methacrylat der Formel CH₂=C(CH₃)-COOR₃, wobei R₃ eine lineare C₄-C₁₂-Alkylgruppe oder eine verzweigte C₅-C₁₂-Alkylgruppe ist, und/oder
(iii) ein Dienmonomer wie Butadien oder Isopren;
wobei das besagte Blockcopolymer assoziative Gruppen auf der Basis eines stickstoffhaltigen Heterocyclus aufweist, wobei die besagten assoziativen Gruppen durch eine oder mehrere kovalente Bindungen mit dem Blockcopolymer verbunden sind und aus einer Imidazolidonyl-, Triazolyl-, Triazinyl-, Bisureyl - und Ureidopyrimidyl-Gruppe, vorzugsweise aus einer Imidazolidonylgruppe, ausgewählt sind.

6. Copolymer nach Anspruch 5, **dadurch gekennzeichnet, dass** der Block A Methylmethacrylat-Monomere aufweist oder aus ihnen besteht.

7. Copolymer nach Anspruch 5 oder 6, **dadurch gekennzeichnet, dass** der Block B zumindest ein Monomer aufweist, das aus n-Butylacrylat, 2-Ethylhexylacrylat, Hydroxyethylacrylat, 2-Ethylhexylmethacrylat, n-Octylacrylat und deren Mischungen ausgewählt ist.

8. Copolymer nach einem der Ansprüche 5 bis 7, **dadurch gekennzeichnet, dass** das Copolymer ein Methylmethacrylat/n-Butylacrylat/Methylmethacrylat-Blockcopolymer ist.

9. Copolymer nach Anspruch 5, **dadurch gekennzeichnet, dass** der Block A Styrolmonomere aufweist oder aus ihnen besteht.

10. Copolymer nach Anspruch 5 oder 9, **dadurch gekennzeichnet, dass** der Block B Butadien- und/oder Isopren-Monomere aufweist oder aus ihnen besteht.

11. Copolymer nach einem der Ansprüche 5 oder 9, **dadurch gekennzeichnet, dass** das Copolymer ein Styrol/Butylacrylat/Styrol-Copolymer ist.

12. Copolymer nach einem der Ansprüche 5 bis 11, **dadurch gekennzeichnet, dass** die mittlere Anzahl der assoziativen Gruppen pro Copolymerkette zwischen 1 und 200, vorzugsweise zwischen 1 und 30, liegt.

13. Verwendung eines Copolymers nach einem der Ansprüche 5 bis 12 zur Herstellung eines Haftstoffs.

14. Verwendung eines Copolymers nach einem der Ansprüche 5 bis 13 zur Verbesserung des Schmelzverhaltens eines Schmelzhaftstoffs und/oder seines Anhaftens an Trägern.
